# EUROPÄISCHE PATENTSCHRIFT

(11) **EP 3 441 241 B1**
(45) Veröffentlichungstag und Bekanntmachung des Hinweises auf die Patenterteilung: **14.10.2020**
(21) Anmeldenummer: 18171986.5
(22) Anmeldetag: 14.05.2018
(51) Int. Cl.: B60C 11/12

(54) **FAHRZEUGLUFTREIFEN**
PNEUMATIC TYRES FOR A VEHICLE
PNEUMATIQUE DE VÉHICULE

(30) Priorität: 08.08.2017 DE 102017213820
(43) Veröffentlichungstag der Anmeldung: 13.02.2019
(73) Patentinhaber: Continental Reifen Deutschland GmbH, 30165 Hannover (DE)
(72) Erfinder: Seng, Matthias, 30453 Hannover (DE); Brockmann, Jürgen, 30171 Hannover (DE); Dzick, Jürgen, 30926 Seelze (DE)
(74) Vertreter: Finger, Karsten

(56) Entgegenhaltungen:
- WO-A1-2016/089501
- DE-A1-102008 024 983
- DE-A1-102008 062 610
- JP-A- 2013 006 549
- US-A1- 2011 290 393
- US-A1- 2012 132 337

## Beschreibung

Die Erfindung betrifft einen Fahrzeugluftreifen mit einem Laufstreifen mit durch Rillen begrenzten Profilpositiven, wie beispielsweise Profilblöcken oder Profilbändern, welche mit in Draufsicht parallel zueinander sowie sich unter einem um bis zu 45° von der Querrichtung abweichenden Winkel erstreckenden Einschnitten mit einer Breite an der Laufstreifenperipherie von 0,4 mm bis 0,8 mm versehen sind, wobei die Einschnitte an der Oberfläche der Profilpositiven jeweils durch zwei Einschnittkanten begrenzt sind, von welchen jeweils eine die Einschnitte im Inneren begrenzende Einschnittwand ausgehet, wobei an der einen Einschnittwand zumindest ein den jeweiligen Einschnitt lokal verschmälernder Vorsprung und an der anderen Einschnittwand zu jedem Vorsprung eine korrespondierende Vertiefung ausgebildet ist, wobei die Einschnittwände ansonsten unstrukturiert sind, wobei der Laufstreifen laufrichtungsgebunden ausgeführt ist, sodass die eine Einschnittkante der Einschnitte beim Abrollen des Reifens bei Vorwärtsfahrt die zuerst in den Untergrund eintretende, einlaufende Einschnittkante und die zweite Einschnittkante die auslaufende Einschnittkante ist, wobei der Vorsprung an der einen Einschnittwand gegenüber seiner korrespondierenden Vertiefung an der anderen Einschnittwand ausschließlich in radialer Richtung versetzt ist, wobei der Vorsprung bzw. die Vertiefung, welcher bzw. welche sich an der von der einlaufenden Einschnittkante ausgehenden Einschnittwand befindet, gegenüber der Vertiefung bzw. dem Vorsprung, welche bzw. welcher sich an der von der auslaufenden Einschnittkante ausgehenden Einschnittwand befindet, tiefer im Inneren des Einschnittes ausgebildet ist.

Ein derartiger Fahrzeugluftreifen ist beispielsweise aus der US 2011/290393 A1 bekannt. Bei diesem, mit einem laufrichtungsgebunden gestalteten Laufstreifen versehenen Reifen, sind im Laufstreifen Profilblöcke vorgesehen, die jeweils eine Anzahl von Einschnitten aufweisen. An jeder Einschnittwand sind Vorsprünge ausgebildet, welchen an der gegenüberliegenden Einschnittwand Vertiefungen gegenüber liegen, die, im radialen Schnitt durch den jeweiligen Einschnitt betrachtet, wesentlich größer sind als die Vorsprünge.

Bei dem aus der US 2012/132337 A1 bekannten Fahrzeugluftreifen weist der Laufstreifen ebenfalls Profilblöcke mit jeweils einer Vielzahl von Einschnitten auf, deren Einschnittwände in radialer Richtung in einer Zick-Zack-Form verlaufen, derart, dass sich jeder Einschnitt aus einer Folge von abwechselnden dünnen Abschnitten und dicken Abschnitten zusammensetzt. Jeder dünne Abschnitt ist in einem Winkel von höchstens 40° zur radialen Richtung geneigt, jeder dicke Abschnitt verläuft unter einem Winkel von 60° bis 120° zur radialen Richtung. Bei dem aus der WO 2016/089501 A1 bekannten Fahrzeugluftreifen sind im Laufstreifen in den schulterseitigen Profilelementen, die beispielsweise Profilblöcke sind, in axialer Richtung orientierte Einschnitte ausgebildet, an deren Einschnittwänden, einander gegenüberliegend, lokal Vorsprünge ausgebildet sind. Die DE 10 2008 062 610 A1 befasst sich mit einem Luftreifen mit einem Laufstreifen mit einer Vielzahl von Einschnitten, wobei jeder Einschnitt in Tiefenrichtung drei Bereiche aufweist, die in Tiefenrichtung kontinuierlich aneinander anschließen und von Vorsprüngen und Vertiefungen an den Einschnittwänden gebildet sind, sodass die Einschnitte eine Art stufenförmigen Verlauf in radialer Richtung aufweisen. Die DE 10 2008 024983 A1 offenbart einen Fahrzeugluftreifen mit einem laufrichtungsgebunden Laufstreifen mit Einschnitten mit an den Einschnittwänden ausgebildeten, in axialer Richtung verlaufenden Vertiefungen. Die Vertiefungen sind sowohl an jener Einschnittwand ausgebildet, die auf die einlaufende Einschittkante folgt, als auch an jener Einschnittwand, die an die auslaufende Einschnittkante des jeweiligen Einschnittes anschließt. Die radialen Erstreckungen der Vertiefungen an der einen Einschnittwand unterscheiden sich von jenen an der anderen Einschittwand. Aus der JP 2013 006549 A ist ein Fahrzeugluftreifen mit einem Laufstreifen mit Profilblöcken mit Einschnitten bekannt, an deren beiden Einschnittwänden übereinstimmend gestaltete, keilartig gestaltete Vorsprünge ausgebildet sind, wobei die Vorsprünge, die an der einen Einschnittwand ausgebildet sind, gegenüber jenen, die an der anderen Einschnittwand ausgebildet sind, in radialer Richtung versetzt sind.

Ein weiterer Fahrzeugluftreifen ist aus der DE 10 2011 078 015 A1 bekannt. In der radial äußeren Einschnitthälfte sind die Vorsprünge dichter positioniert als in der radial inneren Einschnitthälfte. Beim Bremsen greifen Vorsprünge und Vertiefungen ineinander, wodurch die Steifigkeit des jeweiligen Profilpositiven erhöht wird und derart die Bremseigenschaften auf eisbedeckter und trockner Fahrbahn verbessert werden sollen.

Die DE 10 2010 000 272 A1 offenbart einen weiteren Fahrzeugluftreifen mit einem Laufstreifen mit Profilpositiven, welche mit Einschnitten versehen sind. An den gegenüberliegenden Einschnittwänden sind miteinander korrespondiere Vorsprünge und Vertiefungen ausgebildet. Die Vorsprünge sind insgesamt gerundet ausgeführt und weisen eine in radialer Richtung und im Wesentlichen senkrecht zur Einschnittwand orientierte Stützfläche auf. Die Breite der Einschnitte ist konstant. Derart ausgestaltete Einschnitte sollen bei fortschreitendem Abrieb den Profilpositiven zunächst eine gute Aufnahme von Seitenkräften ermöglichen und später zu einem gleichmäßigen Abrieb beitragen.

Der Erfindung liegt die Aufgabe zugrunde, bei einem Fahrzeugluftreifen der eingangs genannten Art eine derartige Abstützung der Vorsprünge und Vertiefungen aneinander zu ermöglichen, dass unter Traktionsbelastung eine optimale Versteifung der Profilpositive, beispielsweise von Profilblöcken, und unter Wirkung von Bremskräften ein guter Nassgriff sichergestellt sind.

Die gestellte Aufgabe wird erfindungsgemäß dadurch gelöst, dass das Positiv des Vorsprunges dem Negativ der korrespondieren Vertiefung entspricht.

Im Gegensatz zu den bekannten Reifen, greifen beim Abrollen eines erfindungsgemäßen Reifens, vor allem unter der Wirkung von Traktionskräften die Vorsprünge und die korrespondieren Vertiefungen unter entsprechender Verformung der Profilpositive ineinander. Durch den vorgesehenen Versatz zwischen Vorsprüngen und Vertiefungen verbiegen sich die durch die Einschnitte gebildeten einzelnen Segmente der Profilpositive höchstens bis zu einem genau definierten maximalen Biegewinkel zwischen Segmentoberfläche und Untergrund. Die ab dann ineinandergreifenden Vorsprünge und Vertiefungen wirken einer weiteren Verformung der Profilblöcke entgegen. Dies ist für die Griffwirkung der an der Oberfläche der Profilpositive befindlichen Einschnittkanten und Blockkanten von besonderem Vorteil, da die Einschnitt- und Blockkanten derart besonders wirkungsvoll in die Schnee- und oder Eisoberfläche der Fahrbahn eingreifen können.

Traktionskräfte werden somit sehr wirkungsvoll vom Reifen auf schnee- und/oder eisbedeckten Untergrund übertragen. Unter der Wirkung von Bremskräften können sich die Vorsprünge an den unstrukturierten Bereichen der gegenüberliegenden Einschnittwände abstützen, sodass eine gute Wasserableitung durch die Einschnitte hindurch erhalten bleibt. Dadurch, dass das Positiv des Vorsprunges dem Negativ der korrespondieren Vertiefung entspricht passen die Vorsprünge optimal in die Vertiefungen, wodurch die Profilpositive unter Belastung besonders effektiv stabilisiert werden.

Gemäß mehreren bevorzugten alternativen und/oder sich ergänzenden Ausführungsvarianten der Erfindung ist der Versatz zwischen dem jeweiligen Vorsprung und der seiner korrespondierenden Vertiefung derart gewählt, dass der maximale Biegewinkel, welcher sich unmittelbar aus dem Versatz und der Breite des Einschnittes ergibt, bei neuem Reifen 3° bis 15° beträgt. Ein solcher Winkel trägt zur Verbesserung der Griffwirkung der Einschnitt- und Blockkanten, insbesondere der Griffwirkung unter Traktionsbelastung, bei. Bei einer ersten Ausführungsvariante sind Profilpositive mit zumindest zwei Einschnitten vorgesehen, wobei in den Einschnitten solcher Profilpositive der Versatz zwischen dem Vorsprung und der korrespondierenden Vertiefung 5% bis 25%, insbesondere 6% bis 18%, und bevorzugt 8% bis 14%, des Normalabstandes zwischen in Erstreckungsrichtung ausgerichteten Mittelinien der Einschnitte beträgt.

Bei einer weiteren Ausführungsvariante sind Profilpositive mit einem einzigen Einschnitt vorgesehen, wobei im Einschnitt in solchen Profilpositiven der Versatz zwischen dem Vorsprung und der korrespondierenden Vertiefung 5% bis 25%, insbesondere 6% bis 18%, und bevorzugt 8% bis 14%, des Normalabstandes zwischen der in Erstreckungsrichtung ausgerichteten Mittelinie des Einschnittes und dem in Umfangsrichtung benachbarten Blockende oder der in Umfangsrichtung benachbarten Blockkante ermittelt wird.

In diesem Zusammenhang ist es ferner von Vorteil, wenn der Vorsprung gegenüber dem Niveau der Einschnittwand eine Dicke und die Vertiefung gegenüber dem Niveau der Einschnittwand eine Tiefe aufweist, wobei die Dicke des Vorsprunges und die Tiefe der Vertiefung 25% bis 75%, insbesondere mindestens 50%, der Breite des Einschnittes beträgt.

Die Stabilisierung der Profilpositive unter Belastung lässt sich weiter verbessern, wenn an der einen Einschnittwand zumindest ein weiterer Vorsprung und an der anderen Einschnittwand eine weitere korrespondierende Vertiefung ausgebildet ist.

Bei einer weiteren, für die Stabilisierung der Profilpositive unter Belastung vorteilhaften Ausführung, weisen die an jeder Einschnittwand in radialer Richtung aufeinanderfolgend angeordneten Vorsprünge und/oder Vertiefungen voneinander in radialer Richtung einen Abstand auf, welcher mindestens 50% größer ist als der Versatz zwischen den Vorsprüngen und ihren korrespondierenden Vertiefungen. Bevorzugter Weise beträgt der Abstand zumindest das Doppelte des Versatzes.

Eine besonders gleichmäßige Stabilisierung der Profilpositive wird erzielt, wenn sich die Vorsprünge und die Vertiefungen über die gesamte Erstreckung des Einschnittes erstrecken.

In diesem Fall sind die Vorsprünge und die Vertiefungen langgestreckt und verlaufen parallel zueinander sowie zur radialen Richtung unter einem Winkel von 45° bis 75°. Bei dieser Variante greifen die Vorsprünge und die Vertiefungen sowohl unter in Umfangsrichtung wirkender Traktionsbelastung, als auch unter lateraler (axialer) Belastung, welche beispielsweise bei Kurvenfahrt auftritt, ineinander.

Eine besonders gleichmäßige Stabilisierung der Profilpositive über ihre radiale Erstreckung lässt sich mit Einschnitten erzielen, welche an jeder Einschnittwand insgesamt bis zu vier Vorsprünge und/oder Vertiefungen aufweisen, wobei diesbezüglich von Vorteil ist, wenn sämtliche Vorsprünge an der einen Einschnittwand und sämtliche Vertiefungen an der anderen Einschnittwand ausgebildet sind.

Auch eine Ausgestaltung, bei welcher auf jeder Einschnittwand die Anzahl an Vorsprüngen mit der Anzahl an Vertiefungen übereinstimmt, trägt zu gleichmäßige Stabilisierung der Profilpositive bei. Die Gesamtmenge an Gummimantel in unmittelbar benachbarten Segmenten der Profilpositive bleibt dadurch im Wesentlichen unverändert.

Gemäß einer weiteren bevorzugten Ausführungsvariante sind auf jeder Einschnittwand ein Vorsprung und eine Vertiefung ausgebildet, wobei im Querschnitt des Einschnittes betrachtet, die Vertiefungen zwischen den Vorsprüngen oder umgekehrt positioniert sind.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 eine Ansicht von Profilblöcken eines Laufstreifens eines Fahrzeugluftreifens mit einer Ausführungsvariante der Erfindung,
Fig. 2 einen Schnitt entlang der Linie II- II der Fig. 1,
Fig. 3 eine Ansicht auf eine Einschnittwand eines Einschnittes,
Fig. 4 eine Seitenansicht auf einen Profilblock im Bereich eines Einschnittes beim Abrollen des Reifens unter Traktionsbelastung,
Fig. 5 eine Seitenansicht auf einen Profilblock im Bereich eines Einschnittes beim Abrollen des Reifens unter Bremsbelastung,
Fig. 6 einen zu Fig. 2 analogen Schnitt mit einer zweiten Ausführungsvariante der Erfindung und
Fig. 7 eine zu Fig. 3 analoge Ansicht mit einer dritten Ausführungsvariante der Erfindung.

Die Erfindung befasst sich mit der Ausgestaltung von Einschnitten in Laufstreifen von für den Wintereinsatz vorgesehenen Fahrzeugluftreifen in Radialbauart, insbesondere für Personenkraftwagen, Vans oder Light-Trucks.

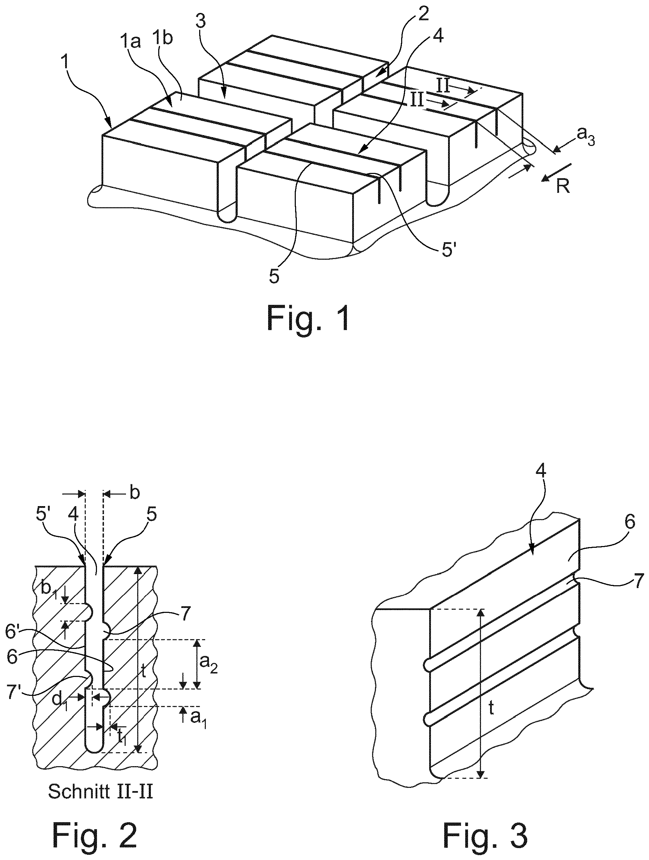

Fig. 1 zeigt vier Profilblöcke 1, welche zu zwei im mittleren Laufstreifenbereich nebeneinander verlaufenden Blockreihen gehören, die durch eine beim gezeigten Ausführungsbeispiel gerade verlaufende Umfangsrille 2 voneinander getrennt sind, wobei weitere nicht bezeichnete Umfangsrillen die Blockreihen begrenzen. Der Pfeil R kennzeichnet die Abrollrichtung bei Vorwärtsfahrt.

Die Umfangsrille 2 weist in radialer Richtung die für den jeweiligen Fahrzeugluftreifen vorgesehene Profiltiefe auf, welche 6,5 mm bis 10,0 mm, insbesondere bis zu 9,0 mm, beträgt. Innerhalb der Blockreihen sind in Umfangsrichtung benachbarte Profilblöcke 1 jeweils durch eine Querrille 3 voneinander getrennt, welche beim gezeigten Ausführungsbeispiel eine mit der Umfangsrille 2 übereinstimmende Tiefe aufweist.

Jeder Profilblock 1 ist mit zwei übereinstimmend ausgeführten Einschnitten 4 versehen, welche innerhalb jedes Profilblockes 1 gleichmäßig verteilt angeordnet sind, sich in Draufsicht gerade sowie in Querrichtung und daher parallel zueinander erstrecken und den jeweiligen Profilblock 1 durchqueren. Die Einschnitte 4 gliedern jeden Profilblock 1 in drei Blocksegmente 1a mit je einer Segmentoberfläche 1b. Die Einschnitte 4 weisen voneinander einen Abstand a₃ auf, welcher zwischen ihren Mittellinien in Umfangrichtung ermittelt wird.

An der Oberfläche eines Profilblockes 1 ist jeder Einschnitt 4 durch eine beim Abrollen des Reifens bei Vorwärtsfahrt zuerst in die Bodenaufstandsfläche eintretender einlaufende Einschnittkante 5 und eine auslaufende Einschnittkante 5' begrenzt. Wie Fig. 2 zeigt, verlaufen von den Einschnittkanten 5,5' zwei Einschnittwände 6, 6' ins Innere des Einschnittes 4 und begrenzen derart den Einschnitt 4. Beim gezeigten Ausführungsbeispiel verlaufen die Einschnittwände 6, 6' in radialer Richtung und sind daher parallel zueinander ausgerichtet. In radialer Richtung weisen die Einschnitte 4 über ihre Erstreckung eine vorzugsweise konstante Tiefe t (Fig. 3) auf, welche 70% bis 100% der Profiltiefe beträgt. An der Laufstreifenperipherie weisen die Einschnitte 4 eine Breite b von 0,4 mm bis 0,8 mm auf.

An der zur einlaufenden Einschnittkante 5 verlaufenden Einschnittwand 6 sind zwei lokale Vertiefungen 7 und an der zur auslaufenden Einschnittkante 5' verlaufenden Einschnittwand 6' sind zwei Vorsprünge 7' ausgebildet. In den von Vertiefungen 7 und Vorsprüngen 7' freien Bereichen der Einschnittwände 6, 6' sind die Einschnittwände 6, 6' unstrukturiert, sodass die Einschnitte 4 in diesen Bereichen beim gezeigten Ausführungsbeispiel eine konstante Breite b aufweisen.

Die Vorsprünge 7' weisen zu den Vertiefungen 7 eine korrespondierende Gestalt auf. Das Positiv eines Vorsprunges 7' entspricht insbesondere dem Negativ einer Vertiefung 7. Die Vorsprünge 7' und die Vertiefungen 7 sind beim gezeigten Ausführungsbeispiel, im Querschnitt des Einschnittes 5 betrachtet, gerundet, insbesondere halbkreisförmig, und erstrecken sich, wie die Ansicht auf die Einschnittwand 6 für die Vertiefungen 7 in Fig. 3 zeigt, über die gesamte Länge des Einschnittes 4 jeweils in einer gleichbleibenden Tiefe und daher parallel zur Laufstreifenperipherie sowie zu den Einschnittkanten 5, 5'. Dementsprechend sind die Vorsprünge 7' stegartig ausgeführt.

Gemäß Fig. 2 weisen die Vorsprünge 7' und die Vertiefungen 7 an der Einschnittwand 6, 6' senkrecht zu ihrer Erstreckungsrichtung und daher beim gezeigten Ausführungsbeispiel in radialer Richtung eine Breite b₁ von 0,5 mm bis 2,0 mm, insbesondere von höchstens 1,0 mm, auf. Die Vorsprünge 7' weisen ferner gegenüber dem Niveau der Einschnittwand 6' an ihrer dicksten Stelle eine Dicke d₁ auf, welche mit einer gegenüber dem Niveau der Einschnittwand 6 an der tiefsten Stelle der Vertiefungen 7 ermittelten Tiefe t₁ übereinstimmt. Die Dicke d₁ der Vorsprünge 7' und die Tiefe t₁ der Vertiefungen 7 beträgt jeweils 25% bis 75%, insbesondere mindestens 50%, der Breite b des Einschnittes 5.

Die zwei Vorsprünge 7' sind zu den zwei Vertiefungen 7 derart in radialer Richtung versetzt, dass, im Querschnitt des Einschnittes 4 betrachtet, jeweils ein Vorsprung 7' abwechselnd auf jeweils eine Vertiefung 7 folgt. Der tiefer im Einschnitt 4 befindliche Vorsprung 7' weist zur tiefer im Einschnitt 4 befindlichen Vertiefung 7 einen Versatz a₁ auf, welcher zwischen den bezüglich der radialen Richtung gleich positionierten Enden dieses Vorsprunges 7' und dieser Vertiefung 7 ermittelt wird. Der näher zur Oberfläche des Profilblockes 1 befindliche Vorsprung 7' weist zur näher zur Oberfläche des Profilblockes 1 befindlichen Vertiefung 7 ebenfalls den Versatz a₁ auf. Der Versatz a₁ beträgt 5% bis 25%, insbesondere 6% bis 18%, und vorzugsweise 8% bis 14% des Abstandes a₃ zwischen den Einschnitten 4 eines Profilblockes 1. Bei der in Fig. 2 gezeigt Variante sind die Vertiefungen 7 gegenüber ihrem jeweils korrespondierende Vorsprung 7' tiefer im Einschnitt 4 ausgebildet.

Die an der Einschnittwand 6' befindlichen Vorsprünge 7' und die an der Einschnittwand 6 ausgebildeten Vertiefungen 7 weisen voneinander in radialer Richtung jeweils einen Abstand a₂ auf, welcher mindestens 50% größer ist als der Versatz a₁. Bevorzugter Weise beträgt der Abstand a₂ mindestens das Doppelte des Versatzes a₁.

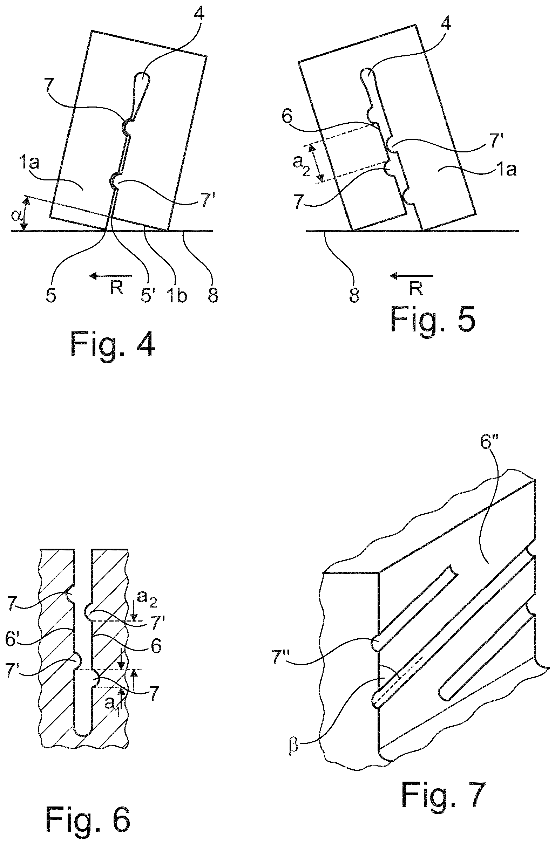

In Fig. 4 und Fig. 5 ist die Abrollrichtung bei Vorwärtsfahrt ebenfalls durch einen Pfeil R andeutet. Es sind jeweils von einem Profilblock 1 zwei durch einen Einschnitt 4 gebildete Blocksegmente 1a zu sehen, welche auf einer angedeuteten Fahrbahn 8 abrollen. Wie Fig. 4 zeigt, werden bei ausreichend großer Traktionsbelastung die Blocksegmente 1a derart verformt, dass die Vorsprünge 7' in die Vertiefungen 7 gedrückt werden, wodurch der Profilblock 1 versteift wird und die Segmentoberflächen 1b unter einem definierten Biegewinkel α orientiert werden. Die jeweilige Größe des Biegewinkels α ist durch den gewählten Versatz a₁ und die Breite b des Einschnittes 4 bestimmt und beträgt bei neuem Reifen insbesondere 3° bis 15°. Wie Fig. 5 zeigt, stützten sich die Vorsprünge 7' unter Bremsbelastung zwischen den Vertiefungen 7 an der gegenüberliegenden Einschnittwand 6 ab und verhindern derart ein Schließen des Einschnittes 4, wodurch beim Bremsen auf nasser Fahrbahn weiterhin Wasser ins Innere des Einschnittes 4 einströmen kann. Beim Bremsen auf schneebedeckter Fahrbahn nimmt der geöffnete Einschnitt 4 etwas Schnee auf, was den Griff zum Untergrund durch den Effekt der Schnee-Schnee-Reibung erhöht.

Bei der in Fig. 6 gezeigten Variante sind an jeder Einschnittwand 6, 6' ein Vorsprung 7' und eine Vertiefung 7 ausgebildet. Die beiden Vorsprünge 7' befinden sich, im Querschnitt des Einschnittes 4 betrachtet, zwischen den Vertiefungen 7. Der tiefer im Einschnitt 4 befindliche Vorsprung 7' weist zur tiefer im Einschnitt 4 befindlichen Vertiefung 7 den erwähnten Versatz a₁ auf. Der näher zur Oberfläche des Profilblockes befindliche Vorsprung 7' weist zur näher zur Oberfläche des Profilblockes 1 befindlichen Vertiefung 7 ebenfalls den Versatz a₁ auf. Die an jeder Einschnittwand 6, 6' ausgebildete Vertiefung 7 weist zu dem an dieser Einschnittwand 6, 6'ausgebildeten Vorsprung 7' den erwähnten Abstand a₂ auf.

Fig. 7 zeigt eine Ansicht auf eine Einschnittwand 6" mit einer weiteren Variante. Die Einschnittwand 6" ist mit drei Vertiefungen 7" versehen, welche unter einem Winkel β von 45° bis 75° zur radialen Richtung verlaufen. Hinsichtlich ihrer Breite, ihrer Tiefe und ihrem Querschnitt stimmen die Vertiefungen 7" mit den bereits beschriebenen Vertiefungen 7 überein. Auf der nicht gezeigten gegenüberliegenden Einschnittwand sind zu den Vertiefungen 7" korrespondierende Vorsprünge ausgebildet, welche ebenfalls unter dem Winkel β verlaufen und zu den Vertiefungen 7" den bereits beschriebenen Versatz a₁ aufweisen. Bei dieser Variante greifen die Vorsprünge und die Vertiefungen 7" sowohl unter in Umfangsrichtung wirkender Traktionsbelastung, als auch unter lateraler (axialer) Belastung, welche beispielsweise bei Kurvenfahren auftritt, ineinander ein.

Die Erfindung ist auf die beschriebenen Ausführungsvarianten nicht beschränkt. Insbesondere können die Vorsprünge und die Vertiefungen im Querschnitt beispielsweise rechteckig ausgeführt sein. Ferner können die Vorsprünge und die Vertiefungen kuppelförmig, insbesondere in Form eines Kugelsegmentes, besonders bevorzugt halbkugelförmig, ausgeführt sind. Auch bei diesen Varianten weisen die Vertiefungen die Tiefe t₁ und die Breite b₁ und die Vorsprünge die Dicke d₁ und die Breite b₁ auf. Die Vorsprünge und Vertiefungen sind ferner auf die bereits beschriebene Weisen zueinander versetzt und beabstandet.

Gemäß der Erfindung gestaltete Einschnitte können in beliebigen Profilpositiven, insbesondere auch in Umfangsrichtung umlaufenden Profilbändern oder schulterseitigen Profilblöcken, ausbildet sein. Die Profilbänder sind insbesondere mit weiteren Rillen und dergleichen strukturiert. In Profilpositiven, welche mit einem einzigen Einschnitt versehen sind, beträgt der Versatz zwischen Vorsprung und korrespondierender Vertiefung 5% bis 25% des Normalabstandes zwischen der in Erstreckungsrichtung ausgerichteten Mittelinie des Einschnittes und dem in Umfangsrichtung benachbarten bzw. am Nächsten zu diesem Einschnitt befindlichen Blockende oder zu der in Umfangsrichtung benachbarten bzw. am Nächsten zu diesem Einschnitt befindlichen Blockkante.

Innerhalb der Profilpositive verlaufen die Einschnitte derart, dass ihre in Draufsicht jeweils in Erstreckungsrichtung ausgerichteten Mittellinien, unter Vernachlässigung der gekrümmten Außenkontur des Laufstreifens bzw. des Fahrzeugluftreifens, parallel zueinander verlaufen. Im Rahmen der gegenständlichen Erfindung verlaufen Einschnitte in diesem Sinn daher im Wesentlichen parallel oder parallel zueinander. Die Einschnitte können sich in Draufsicht unter einem von der axialen Richtung um bis zu 45° abweichenden Winkel erstrecken und können auch innerhalb der Profipositive enden oder nur mit einem ihrer Enden in eine Rille einmünden. Die Einschnitte können in Draufsicht insbesondere zumindest abschnittsweise wellen-, zick-zack- oder sägezahnförmig verlaufen. Die Tiefe der Einschnitte kann über die Erstreckung der Einschnitte variieren, wobei die Einschnitte an ihrer tiefsten Stelle eine Tiefe von 70% bis 100% der Profiltiefe aufweisen und insbesondere seichtere in Rillen einmündende randseitige Endabschnitte vorgesehen sein können.

### Bezugszeichenliste

- 1: Profilblock
- 1a: Blocksegmente
- 1b: Segmentoberfläche
- 2: Umfangsrille
- 3: Querrille
- 4: Einschnitte
- 5, 5': Einschnittkante
- 6, 6', 6": Einschnittwand
- 7, 7": lokale Vertiefung
- 7': Vorsprung
- 8: Fahrbahn
- a₁: Versatz
- a₂ a₃: Abstand
- b: Breite
- b₁: Breite
- d₁: Dicke
- t: Tiefe
- t₁: Tiefe
- R: Pfeil (Abrollrichtung)
- α: Biegewinkel
- β: Winkel

## Patentansprüche

1. Fahrzeugluftreifen mit einem Laufstreifen mit durch Rillen (2, 3) begrenzten Profilpositiven (1), wie beispielsweise Profilblöcken (1) oder Profilbändern, welche mit sich unter einem um bis zu 45° von der Querrichtung abweichenden Winkel erstreckenden Einschnitten (4) mit einer Breite (b) an der Laufstreifenperipherie von 0,4 mm bis 0,8 mm versehen sind, wobei die Einschnitte (4) an der Oberfläche der Profilpositiven (1) jeweils durch zwei Einschnittkanten (5, 5') begrenzt sind, von welchen jeweils eine die Einschnitte (4) im Inneren begrenzende Einschnittwand (6, 6') ausgeht, wobei an der einen Einschnittwand (6') zumindest ein den jeweiligen Einschnitt (4) lokal verschmälernder Vorsprung (7') und an der anderen Einschnittwand (6) zu jedem Vorsprung (7') eine korrespondierende Vertiefung (7, 7") ausgebildet ist, wobei die Einschnittwände (6, 6") ansonsten unstrukturiert sind, wobei der Laufstreifen laufrichtungsgebunden ausgeführt ist, sodass die eine Einschnittkante (5) der Einschnitte (4) beim Abrollen des Reifens bei Vorwärtsfahrt die zuerst in den Untergrund eintretende, einlaufende Einschnittkante (5) und die zweite Einschnittkante (5') die auslaufende Einschnittkante (5') ist,
wobei der Vorsprung (7') an der einen Einschnittwand (6') gegenüber seiner korrespondierenden Vertiefung (7, 7") an der anderen Einschnittwand (6) ausschließlich in radialer Richtung versetzt ist, wobei der Vorsprung (7') bzw. die Vertiefung (7, 7"), welcher bzw. welche sich an der von der einlaufenden Einschnittkante (5) ausgehenden Einschnittwand (6) befindet, gegenüber der Vertiefung (7, 7") bzw. dem Vorsprung (7'), welche bzw. welcher sich an der von der auslaufenden Einschnittkante (5') ausgehenden Einschnittwand (6') befindet, tiefer im Inneren des Einschnittes (4) ausgebildet ist, **dadurch gekennzeichnet, dass** das Positiv des Vorsprunges (7') dem Negativ der korrespondieren Vertiefung (7, 7") entspricht.

2. Fahrzeugluftreifen nach Anspruch 1, **dadurch gekennzeichnet, dass** Profilpositive mit zumindest zwei Einschnitten (4) vorgesehen sind, wobei in den Einschnitten (4) solcher Profilpositive der Versatz (a₁) zwischen dem Vorsprung (7') und der korrespondierenden Vertiefung (7, 7") 5% bis 25%, insbesondere 6% bis 18%, und bevorzugt 8% bis 14%, des Normalabstandes zwischen in Erstreckungsrichtung ausgerichteten Mittelinien der Einschnitte (4) beträgt.

3. Fahrzeugluftreifen nach Anspruch 1, **dadurch gekennzeichnet, dass** Profilpositive mit einem einzigen Einschnitt (4) vorgesehen sind, wobei im Einschnitt (4)in solchen Profilpositiven der Versatz (a₁) zwischen dem Vorsprung (7') und der korrespondierenden Vertiefung (7, 7") 5% bis 25%, insbesondere 6% bis 18%, und bevorzugt 8% bis 14%, des Normalabstandes zwischen der in Erstreckungsrichtung ausgerichteten Mittelinie des Einschnittes (4) und dem in Umfangsrichtung benachbarten Blockende oder der in Umfangsrichtung benachbarten Blockkante ermittelt wird.

4. Fahrzeugluftreifen nach einem der Ansprüche 1 bis 3, **dadurch gekennzeichnet, dass** der Vorsprung (7') gegenüber dem Niveau der Einschnittwand eine Dicke (d₁) und die Vertiefung (7, 7") gegenüber dem Niveau der Einschnittwand eine Tiefe (t₁) aufweist, wobei die Dicke des Vorsprunges (7') und die Tiefe der Vertiefung (7, 7") 25% bis 75%, insbesondere mindestens 50%, der Breite (b) des Einschnittes (5) beträgt.

5. Fahrzeugluftreifen nach einem der Ansprüche 1 bis 4, **dadurch gekennzeichnet, dass** an der einen Einschnittwand (6, 6') zumindest ein weiterer Vorsprung (7') und an der anderen Einschnittwand (6, 6') zumindest eine weitere mit diesem korrespondierende Vertiefung (7) ausgebildet ist.

6. Fahrzeugluftreifen nach Anspruch 5, **dadurch gekennzeichnet, dass** die an jeder Einschnittwand (6, 6') in radialer Richtung aufeinanderfolgend angeordneten Vorsprünge (7') und/oder Vertiefungen (7, 7") voneinander in radialer Richtung einen Abstand (a₂) aufweisen, welcher um mindestens 50% größer ist als der Versatz (a₁) zwischen den Vorsprüngen (7') und ihren korrespondierenden Vertiefungen (7, 7").

7. Fahrzeugluftreifen nach Anspruch 6, **dadurch gekennzeichnet, dass** der Abstand (a₂) zumindest das Doppelte des Versatzes (a₁) beträgt.

8. Fahrzeugluftreifen nach einem der Ansprüche 1 bis 7, **dadurch gekennzeichnet,. dass** sich die Vorsprünge (7') und die Vertiefungen (7, 7") über die gesamte Erstreckung des Einschnittes (4) erstrecken.

9. Fahrzeugluftreifen nach einem der Ansprüche 1 bis 8, **dadurch gekennzeichnet, dass** die Vorsprünge (7') und die Vertiefungen (7, 7") langgestreckt sind und parallel zueinander sowie zur radialen Richtung unter einem Winkel (ß) von 45° bis 75° verlaufen.

10. Fahrzeugluftreifen nach einem der Ansprüche 1 bis 9, **dadurch gekennzeichnet, dass** Einschnitte (4) vorgesehen sind, welche an jeder Einschnittwand (6, 6') insgesamt bis zu vier Vorsprünge (7') und/oder Vertiefungen (7, 7") aufweisen.

11. Fahrzeugluftreifen nach einem der Ansprüche 1 bis 10, **dadurch gekennzeichnet, dass** an der einen Einschnittwand (6') nur Vorsprünge (7') und an der anderen Einschnittwand (6) nur Vertiefungen (7, 7") ausgebildet sind.

12. Fahrzeugluftreifen nach einem der Ansprüche 1 bis 11, **dadurch gekennzeichnet, dass** auf jeder Einschnittwand (6, 6') die Anzahl an Vorsprüngen (7') mit der Anzahl an Vertiefungen (7, 7") übereinstimmt.

13. Fahrzeugluftreifen nach einem der Ansprüche 1 bis 12, **dadurch gekennzeichnet, dass** auf jeder Einschnittwand (6, 6') je ein Vorsprung (7') und je eine Vertiefung (7, 7") ausgebildet sind, wobei im radialen Schnitt des Einschnittes (5) betrachtet, die beiden Vertiefungen (7, 7") zwischen den beiden Vorsprüngen (7') oder umgekehrt positioniert sind.

## Claims

1. Pneumatic vehicle tyre having a tread with profile positives (1), such as for example profile blocks (1) or profile bands, which are delimited by grooves (2, 3) and are provided with sipes (4), extending at an angle deviating from the transverse direction by up to 45°, with a width (b) at the periphery of the tread of 0.4 mm to 0.8 mm, wherein the sipes (4) are respectively bounded at the surface of the profile positives (1) by two sipe edges (5, 5'), from which in each case there extends a sipe wall (6, 6') bounding the sipes (4) on the inside, wherein on the one sipe wall (6') there is formed at least one projection (7'), locally narrowing the respective sipe (4), and on the other sipe wall (6) there is formed for each projection (7') a corresponding depression (7, 7"), wherein the sipe walls (6, 6") are otherwise unstructured, wherein the tread is of a directional configuration, so that as the tyre rolls during forward travel the one sipe edge (5) of the sipes (4) is the running-in sipe edge (5), first to enter the ground, and the second sipe edge (5') is the running-out sipe edge (5'), wherein the projection (7') on the one sipe wall (6') is offset with respect to its corresponding depression (7, 7") on the other sipe wall (6) exclusively in the radial direction, wherein the projection (7') or the depression (7, 7") that is located on the sipe wall (6) extending from the running-in sipe edge (5) is formed deeper inside the sipe (4) than the depression (7, 7") or the projection (7') that is located on the sipe wall (6') extending from the running-out sipe edge (5'),
**characterized in that**
the positive of the projection (7') corresponds to the negative of the corresponding depression (7, 7").

2. Pneumatic vehicle tyre according to Claim 1, **characterized in that** profile positives having at least two sipes (4) are provided, wherein in the sipes (4) of such profile positives the offset (a₁) between the projection (7') and the corresponding depression (7, 7") is 5% to 25%, in particular 6% to 18%, and preferably 8% to 14%, of the normal distance between centre lines of the sipes (4), aligned in the direction of extent.

3. Pneumatic vehicle tyre according to Claim 1, **characterized in that** profile positives having a single sipe (4) are provided, wherein in the sipe (4) in such profile positives the offset (a₁) between the projection (7') and the corresponding depression (7, 7") is determined 5% to 25%, in particular 6% to 18%, and preferably 8% to 14%, of the normal distance between the centre line of the sipe (4), aligned in the direction of extent, and the circumferentially adjacent block end or the circumferentially adjacent block edge.

4. Pneumatic vehicle tyre according to one of Claims 1 to 3, **characterized in that** the projection (7') has a thickness (d₁) with respect to the level of the sipe wall and the depression (7, 7") has a depth (t₁) with respect to the level of the sipe wall, wherein the thickness of the projection (7') and the depth of the depression (7, 7") is 25% to 75%, in particular at least 50%, of the width (b) of the sipe (5).

5. Pneumatic vehicle tyre according to one of Claims 1 to 4, **characterized in that** at least one further projection (7') is formed on the one sipe wall (6, 6') and at least one further depression (7), corresponding to said further projection, is formed on the other sipe wall (6, 6').

6. Pneumatic vehicle tyre according to Claim 5, **characterized in that** the projections (7') and/or depressions (7, 7") arranged following one another in the radial direction on each sipe wall (6, 6') are at a distance (a₂) from one another in the radial direction that is at least 50% greater than the offset (a₁) between the projections (7') and their corresponding depressions (7, 7").

7. Pneumatic vehicle tyre according to Claim 6, **characterized in that** the distance (a₂) is at least twice the offset (a₁).

8. Pneumatic vehicle tyre according to one of Claims 1 to 7, **characterized in that** the projections (7') and the depressions (7, 7") extend over the entire extent of the sipe (4).

9. Pneumatic vehicle tyre according to one of Claims 1 to 8, **characterized in that** the projections (7') and the depressions (7, 7") are elongated and run parallel to one another and run at an angle (β) of 45° to 75° to the radial direction.

10. Pneumatic vehicle tyre according to one of Claims 1 to 9, **characterized in that** sipes (4) that have altogether up to four projections (7') and/or depressions (7, 7") on each sipe wall (6, 6') are provided.

11. Pneumatic vehicle tyre according to one of Claims 1 to 10, **characterized in that** on the one sipe wall (6') only projections (7') are formed and on the other sipe wall (6) only depressions (7, 7") are formed.

12. Pneumatic vehicle tyre according to one of Claims 1 to 11, **characterized in that** on each sipe wall (6, 6') the number of projections (7') coincides with the number of depressions (7, 7").

13. Pneumatic vehicle tyre according to one of Claims 1 to 12, **characterized in that** on each sipe wall (6, 6') one projection (7') and one depression (7, 7") are formed, wherein, when seen in the radial section of the sipe (5), the two depressions (7, 7") are positioned between the two projections (7') or vice versa.

## Revendications

1. Pneumatique de véhicule comprenant une bande de roulement pourvue de sculptures en relief (1) délimitées par des rainures (2, 3), comme par exemple des blocs de sculpture (1) ou des bandes de sculpture, qui sont pourvues d'incisions (4) qui s'étendent en formant un angle allant jusqu'à 45° par rapport à la direction transversale et dont la largeur (b) sur la périphérie de la bande de roulement va de 0,4 mm à 0,8 mm, les incisions (4) sur la surface des sculptures en relief (1) étant chacune délimitées par deux bords d'incision (5, 5') de chacun desquels part une paroi d'incision (6, 6') délimitant les incisions (4) à l'intérieur, au moins une saillie (7'), qui termine l'incision (4) respective localement en pointe, étant formée sur l'une des parois d'incision (6') et un évidement correspondant (7, 7') étant formé pour chaque saillie (7') sur l'autre des parois d'incision (6), les parois d'incision (6, 6'') ne comportant autrement aucune structure, la bande de roulement étant réalisée en étant liée à une direction de roulement de sorte que l'un des bord d'incision (5) des incisions (4) pendant le roulement du pneumatique en marche avant est le bord d'incision entrant (5) qui entre en premier dans le sol et le deuxième bord d'incision (5') étant le bord d'incision sortant (5'), la saillie (7') sur l'une des paroi d'incision (6') étant décalée exclusivement dans une direction radiale par rapport à son évidement correspondant (7, 7'') sur l'autre des parois d'incision (6), la saillie (7') ou l'évidement (7, 7''), qui se trouve sur la paroi d'incision (6) partant du bord d'incision entrant (5), étant conçu(e) pour être plus profond(e) à l'intérieur de l'incision (4) par rapport à l'évidement (7, 7'') ou la saillie (7') qui se trouve sur la paroi d'incision (6') partant du bord d'incision sortant (5'),
**caractérisé en ce que**
le relief de la saillie (7') correspond au creux de l'évidement correspondant (7, 7').

2. Pneumatique de véhicule selon la revendication 1, **caractérisé en ce qu'**il est prévu des sculptures en relief comprenant au moins deux incisions (4), le décalage (a₁) entre la saillie (7') et l'évidement correspondant (7, 7''), dans les incisions (4) de telles sculptures en relief, étant de 5 % à 25 %, en particulier de 6 % à 18 %, et de préférence de 8 % à 14 %, de la distance normale entre des lignes médianes des incisions (4) qui sont orientées dans la direction d'extension.

3. Pneumatique de véhicule selon la revendication 1, **caractérisé en ce que** les sculptures en relief sont pourvues d'une seule incision (4), le décalage (a₁) entre la saillie (7') et l'évidement correspondant (7, 7''), dans l'incision (4) d'une telle sculpture en relief, étant déterminé de 5 % à 25 %, en particulier de 6 % à 18 %, et de préférence 8 % à 14 %, de la distance normale entre la ligne médiane de l'incision (4) qui est orientée dans la direction d'extension et l'extrémité de bloc adjacent dans la direction circonférentielle ou le bord de bloc adjacent dans la direction circonférentielle.

4. Pneumatique de véhicule selon l'une des revendications 1 à 3, **caractérisé en ce que** la saillie (7') a une épaisseur (d₁) par rapport au niveau de la paroi d'incision et l'évidement (7, 7'') a une profondeur (t₁) par rapport au niveau de la paroi d'incision, l'épaisseur de la saillie (7') et la profondeur de l'évidement (7, 7'') étant de 25 % à 75 %, en particulier d'au moins 50 %, de la largeur (b) de l'incision (5).

5. Pneumatique de véhicule selon l'une des revendications 1 à 4, **caractérisé en ce qu'**au moins une autre saillie (7') est formée sur l'une des parois d'incision (6, 6') et au moins un autre évidement (7), correspondant à cette saillie, est formé sur l'autre des parois d'incision (6, 6').

6. Pneumatique de véhicule selon la revendication 5, **caractérisé en ce que** les saillies (7') et/ou les évidements (7, 7''), qui sont disposés les uns à la suite des autres dans la direction radiale sur chaque paroi d'incision (6, 6'), sont espacés les uns des autres dans la direction radiale d'une distance (a₂) qui est supérieure d'au moins 50 % au décalage (a₁) entre les saillies (7') et leurs évidements correspondants (7, 7").

7. Pneumatique de véhicule selon la revendication 6, **caractérisé en ce que** la distance (a₂) est au moins le double du décalage (a₁).

8. Pneumatique de véhicule selon l'une des revendications 1 à 7, **caractérisé en ce que** les saillies (7') et les évidements (7, 7'') s'étendent sur toute l'étendue de l'incision (4).

9. Pneumatique de véhicule selon l'une des revendications 1 à 8, **caractérisé en ce que** les saillies (7') et les évidements (7, 7'') sont allongés et s'étendent parallèlement entre eux et à la direction radiale avec un angle (β) de 45° à 75°.

10. Pneumatique de véhicule selon l'une des revendications 1 à 9, **caractérisé en ce que** des incisions (4) sont prévues qui comportent sur chaque paroi d'incision (6, 6') au total jusqu'à quatre saillies (7') et/ou évidements (7, 7'').

11. Pneumatique de véhicule selon l'une des revendications 1 à 10, **caractérisé en ce que** seules des saillies (7') sont formées sur l'une des parois d'incision (6') et seuls des évidements (7, 7'') sont formés sur l'autre des parois d'incision (6).

12. Pneumatique de véhicule selon l'une des revendications 1 à 11, **caractérisé en ce que** sur chaque paroi d'incision (6, 6') le nombre de saillies (7') correspond au nombre d'évidements (7, 7").

13. Pneumatique de véhicule selon l'une des revendications 1 à 12, **caractérisé en ce qu'**une saillie (7') et un évidement (7, 7'') sont formés sur chaque paroi d'incision (6, 6'), les deux évidements (7, 7'') étant positionnés entre les deux saillies (7') dans la vue en coupe radiale de l'incision (5), ou inversement.
